# EUROPEAN PATENT SPECIFICATION

(11) **EP 1 780 058 B1**
(45) Date of publication and mention of the grant of the patent: **03.06.2009**
(21) Application number: 06022449.0
(22) Date of filing: 27.10.2006
(51) Int. Cl.: B60G 21/073, B60G 17/04, B60G 11/00, B60G 17/033, B60G 11/27

(54) **Spring system for a vehicle**
Federsystem für ein Fahrzeug
Système de suspension pour un véhicule

(30) Priority: 31.10.2005 NL 1030313
(43) Date of publication of application: 02.05.2007
(73) Proprietor: Transport Industry Development Centre B.V., 5692 GA Son en Breugel (NL)
(72) Inventor: van Genugten, Antonius Jacobus, 5298 VK Liempde (NL)
(74) Representative: Dorna, Peter

(56) References cited:
- EP-A- 0 512 550
- EP-A- 1 314 586
- WO-A-03/051656
- US-A- 1 647 518
- US-A- 2 880 014
- US-A- 5 344 124
- US-A- 5 547 211
- PATENT ABSTRACTS OF JAPAN vol. 2000, no. 01, 31 January 2000 (2000-01-31) -& JP 11 291737 A (KAYABA IND CO LTD), 26 October 1999 (1999-10-26)

## Description

The present invention relates to a spring system for a vehicle according to the preamble of claim 1. It is generally known to use a hydraulic spring system wherein oil is forced from a spring cylinder to a hydraulic chamber of a battery upon compression of the vehicle's suspension. In addition to the hydraulic chamber, the battery also comprises a pneumatic chamber, which is filled with a gas. The hydraulic chamber and the pneumatic chamber are separated by a flexible wall. As more oil is forced to the hydraulic chamber of the battery, causing the volume of the hydraulic chamber to increase, the volume of the pneumatic chamber will decrease, and thus the pressure within the pneumatic chamber will increase until an equilibrium is reached between the pressures in the hydraulic chamber on the one hand and the pneumatic chamber on the other hand. When subsequently the vehicle's suspension extends again, a reduced pressure ensues in the spring cylinder, and consequently in the pneumatic chamber as well, causing oil to be forced from the battery to the spring cylinder on account of the higher pressure that still prevails in the pneumatic chamber at that point. Such a spring system is described in EP-A2-1314586. In the spring system in question, a 3/3 valve is actuated upon compression of the suspension of a spring-mounted wheel, via which valve the pneumatic pressure chamber of the battery is placed into communication with a high-pressure chamber, as a result of which an elevated pressure is (temporarily) generated in the pneumatic pressure chamber. Upon subsequent extension of the wheel suspension (partly as a result thereof), the valve is actuated to another position, as a result of which the gas exits the pneumatic pressure chamber to flow into a low-pressure chamber. The actuating mechanism for the valve is rigidly connected to the axle of the spring-mounted wheel in question.

A spring system according to the introduction is known from US-A-5344124, which discloses a suspension system of the hydropneumatic design, whereby the hydraulic medium flows back and forth upon retraction and extension via a hydraulic connection between a shock absorber leg and a hydropneumatic shock absorber reservoir containing a compressible medium so that the reservoir generates a hydraulic pressure by compression of the compressible medium that causes a spring force in the shock absorber lack due to the pressure applied to the piston.

Document US-A-5547211 also discloses a hydropneumatic vehicle suspension system making use of a hydropneumatic piston-type accumulator. This accumulator has a separating piston charged with hydraulic pressure on one side of a storage volume, pneumatic pressure on the other side of a spring chamber and a supplementary spring force via a separating piston rod that extends out of the piston-type accumulator.

The object of the present invention is to provide an improved spring system. More specifically it is an object of the present invention to provide a spring system which, whether or not in preferred embodiments of the invention, combines good spring characteristics with good damping characteristics and good roll stabilisation characteristics. A precondition in that connection is that the spring system should be simple and inexpensive to manufacture.

By using a second hydraulic cylinder, a movable part of which can move jointly with the movable part of the pneumatic accumulator, whilst the fixed parts of the second hydraulic cylinder and the pneumatic accumulator are rigidly connected to a frame, the preconditions for achieving the above objects are created.

The spring system according to the present invention is characterized by the characterizing features of claim 1. The height control valve may be actuated directly (mechanically) or electronically, with the pressure in the pneumatic accumulator being increased as the vehicle "sags" upon being loaded. As a result, the pneumatic accumulator will resume its original length/height, thereby offsetting said "sagging" of the vehicle. In this way the extent of travel of the pneumatic accumulator upon compression is maintained, which has a positive effect on the level of comfort and which ensures that the natural frequency of the spring system, which to a significant extent depends on the spring travel, remains constant or at least substantially constant, irrespective of the degree to which the vehicle is loaded. In addition to that, the spring stiffness of the pneumatic accumulator will increase when the load increases, and thus adjust itself to the degree of loading. As a matter of fact, the speed of response of the height control valve is so low that its action is not noticeable during normal compression and extension of the vehicle's suspension.

To obtain a balanced operation of the spring system, the vehicle preferably comprises a further first hydraulic cylinder, which is connected to a further wheel on the other long side of the vehicle, a pressure chamber of which further first hydraulic cylinder communicates with a pressure chamber of a further second hydraulic cylinder via a further hydraulic pressure line in such a manner that the length of the further second hydraulic cylinder changes upon compression or extension of the suspension of said further wheel, which further second hydraulic cylinder is connected in series with a further pneumatic accumulator within a further frame, wherein a fixed part of said further pneumatic accumulator as well as a fixed part of said further second hydraulic cylinder are rigidly connected to said further frame, and wherein a movable part of said further pneumatic accumulator and a movable part of said further second hydraulic cylinder are interconnected for joint movement.

According to another preferred embodiment, a mechanical transmission may to this end be provided between the second hydraulic cylinder and the height control valve. The height control valve may in that case comprise an actuating mechanism, which is connected to the fixed part of the second hydraulic cylinder on the one hand and to the movable part of the second hydraulic cylinder on the other hand. Alternatively, the length of the second hydraulic cylinder may be electronically determined, after which the height control valve will be actuated in case of a deviation from a neutral length of the second hydraulic cylinder, thereby influencing the pressure in the pneumatic accumulator.

To obtain good damping characteristics, it is preferable to incorporate a non-return valve in the hydraulic pressure line, through which valve hydraulic medium can flow from the pressure chamber of the first hydraulic cylinder to the pressure chamber of the second hydraulic cylinder. This implies that, because of the nature of the non-return valve, hydraulic medium cannot flow from the pressure chamber of the second hydraulic cylinder to the pressure chamber of the first hydraulic cylinder via said non-return valve, but that it must use a different route. This achieves that the flow of oil into the pressure chamber of the second hydraulic cylinder can take place with greater ease than the flow of the same oil from the second hydraulic cylinder. As a result, spring compression can take place relatively easily, whilst on the other hand spring extension is damped.

From a constructional point of view it is preferable in that case if the non-return valve forms part of the second hydraulic cylinder, preferably of the fixed part thereof. As a result of such integration of the non-return valve with the second hydraulic cylinder, the non-return valve no longer forms a separate component. If the non-return valve forms part of the fixed part of the second hydraulic cylinder, the non-return valve will not form part of a moving part, and consequently it will not be subject to mass inertia forces during extension and contraction of the second hydraulic cylinder.

To improve the damping characteristics of the spring system according to the invention, a throttle valve is preferably incorporated in the hydraulic pressure line, through which throttle valve hydraulic medium can flow from the pressure chamber of the second hydraulic cylinder to the pressure chamber of the first hydraulic cylinder. Because of the throttling action of the throttle valve, the hydraulic medium will encounter an increased flow resistance, however.

Preferably, the spring system comprises control means for controlling the operation of the throttle valve, wherein furthermore preferably the control means control the operation of the throttle valve in dependence on the pressure that prevails in the pressure chamber of the further first hydraulic cylinder in case such a cylinder is used in accordance with a previously discussed preferred embodiment. Thus, the damping action of the spring system as such can be influenced as well, preferably in dependence on the pressure that prevails in the pressure chamber of the further first hydraulic cylinder, which is important in particular in view of the roll stability.

A constructionally advantageous embodiment is obtained if the control means comprise an auxiliary pressure line which branches off the further hydraulic pressure line and via which an actuating element of the throttle valve is operated.

It is furthermore constructionally advantageous in that connection if the auxiliary pressure line extends at least partially through the fixed part of the second hydraulic cylinder, so that the part in question of the auxiliary pressure line will not move in use.

Generally, the throttle valve preferably comprises a valve element and an actuating element, wherein the valve is closed in a first position of the actuating element, and wherein the valve element may occupy a closed position or an open position, partially depending on the pressure that prevails in the pressure chamber of the second hydraulic cylinder, in a second position of the actuating element. Thus, return flow of the hydraulic medium from the pressure chamber of the second hydraulic cylinder to the pressure chamber of the first hydraulic cylinder takes place in dependence on the pressure that prevails in the pressure chamber of the second hydraulic cylinder, at least in the second position of the actuating element.

In addition to that, the throttle valve preferably forms part of the second hydraulic cylinder, preferably of the fixed part thereof, for reasons comparable to the reasons why the non-return valve as described above preferably forms part of the second hydraulic cylinder.

Furthermore, the hydraulic pressure line preferably extends at least partially through the fixed part of the second hydraulic cylinder for the same reason that it will be advantageous if the auxiliary pressure line extends at least partially through the fixed part of the second hydraulic cylinder.

For constructional reasons it is advantageous if the fixed part of the second hydraulic cylinder comprises a cylinder rod with a cylinder head on a free end thereof, along which cylinder head the cylinder tube forming part of the movable part of the second hydraulic cylinder can move reciprocatingly. The advantage of this is in particular the fact that the cylinder tube will by definition have a larger diameter than the cylinder rod with the cylinder head and in that sense will be better able to conform to the diameter of the pneumatic accumulator, which is generally characterised by a relatively large diameter.

A more advantageous proportion between the dimensions of the second hydraulic cylinder and those of the pneumatic accumulator is obtained if both the second hydraulic cylinder and the pneumatic accumulator have a diameter and the diameter of the second hydraulic cylinder amounts to less than 40% of the diameter of the pneumatic accumulator. It should be realised in this context that the hydraulic pressures that are used are generally significantly higher than the pneumatic pressures that are used.

In order to achieve that movement of the movable part of the second hydraulic cylinder will also have a significant effect on the pressure in that prevails within the pneumatic accumulator, the spring system preferably comprises a connecting element having a diameter, which functions to connect the movable part of the second hydraulic cylinder to the movable part of the pneumatic accumulator, wherein the diameter of the connecting element ranges between the diameter of the second hydraulic cylinder and the diameter of the pneumatic accumulator.

More in particular, the diameter of the connecting elements preferably ranges between 45% and 85% of the diameter of the pneumatic accumulator. In the case of a lower percentage, the effectiveness of the connecting element will be limited, whilst in the case of a higher percentage the pneumatic accumulator, which is preferably configured as a pneumatic spring bellows, would have to deform too much upon compression and extension of the vehicle's suspension.

To obtain good roll standardisation characteristics, the first hydraulic cylinder and the further first hydraulic cylinder are preferably of the double-acting type, and preferably they communicate crosswise.

At least for weight saving reasons it will be advantageous if the frame is at least partially formed by the vehicle chassis.

In particular from the viewpoint of cost price, it is preferable if the pneumatic accumulator comprises a flexible wall.

A very advantageous embodiment may be obtained if the pneumatic accumulator is a bellows-type accumulator.

It is very advantageous if the pressure chambers associated with the second hydraulic cylinder and the pneumatic accumulator each have a wall of their own that surrounds the respective pressure chamber. In this way the risk of medium flowing from one pressure chamber to the other pressure chamber in case of failure of a wall is practically excluded. The present preferred embodiment may for example be realised with bellows-type pneumatic accumulators according to the preceding preferred embodiments.

To make it possible to adjust the ground clearance of a vehicle in a simple manner, for example in dependence on the load of the vehicle, it is furthermore preferable if a valve or a combination of valves comprising at least three positions is provided, wherein hydraulic medium is supplied to a hydraulic circuit, of which the second hydraulic cylinder forms part, in the first position, hydraulic medium is neither supplied to nor discharged from the hydraulic circuit in the second position and hydraulic medium is discharged form the hydraulic circuit in the third position.

The present invention further relates to a vehicle fitted with a spring system according to the invention as described above.

The invention will now be explained in more detail by means of a description of a preferred embodiment of the present invention, in which reference is made to the following figures:
Figure 1 schematically shows a spring system according to the present invention;
Figures 2a, 3a, 4a and 5a schematically show the spring system of figure 1 in more detail, but without the associated pneumatic accumulators, during normal (neutral) driving, upon compression of the vehicle's suspension, upon (subsequent) extension of the vehicle's suspension and upon taking a left-hand bend, respectively;
Figures 2b, 3b, 4b, 5b show the vehicle in rear view in situations corresponding to the situations shown in figures 2a, 3a, 4a, 5a, respectively;
Figure 6 shows a spring damping unit comprising a pneumatic accumulator and a hydraulic cylinder, which are connected in series, as used in duplicate in the spring system; and
Figure 7 shows a part of the hydraulic cylinder of figure 6.

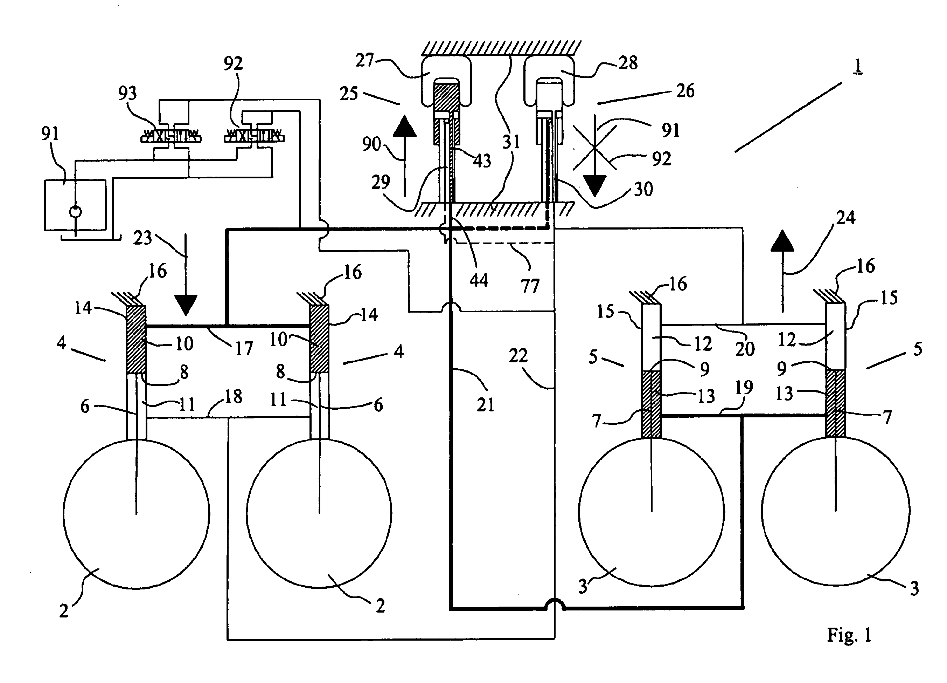

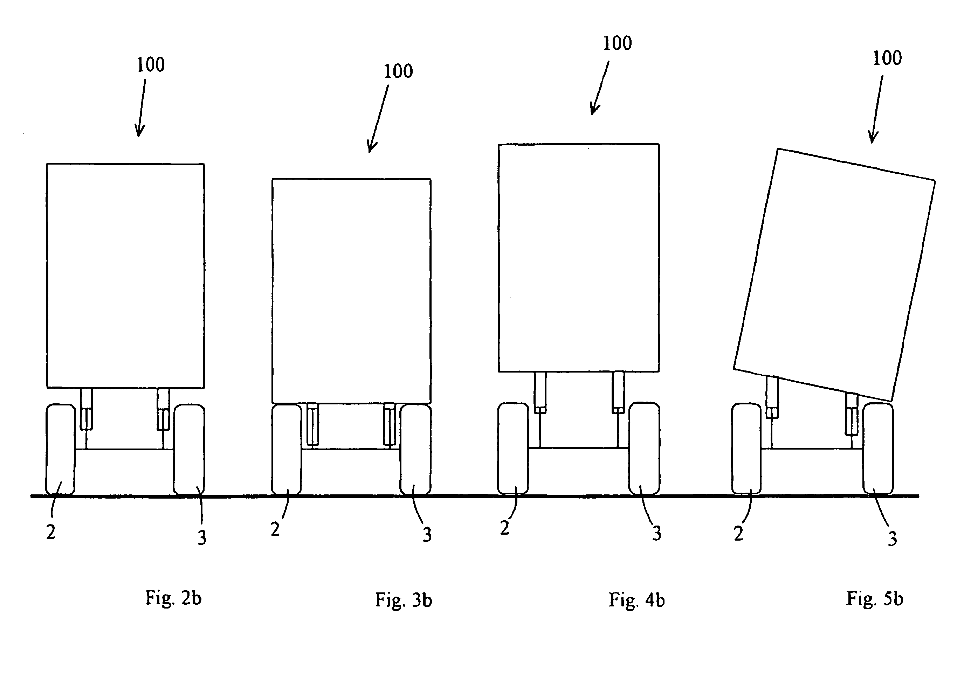

Figure 1 schematically shows a preferred embodiment of a spring system 1 according to the present invention, which is intended for use in a vehicle 100 (figures 2b , 3b , 4b , 5b) with two left-hand wheels 2 and to a right-hand wheels 3. The vehicle 100 may be a self-propelled vehicle or a drawn vehicle, with the advantages of the spring system according to the invention becoming manifest in particular if the vehicle 100 is used for transporting a substantial low, as is for example the case with a truck. A specific aspect of such vehicles is the fact that the weight of the load for such a vehicle may be several times larger than the vehicle's own weight, which makes special demands on the spring system 1.

A hydraulic cylinder 4, 5 is provided for each of the wheels 2, 3. The hydraulic cylinders 4, 5 are of the double-acting type with a one-sided piston rod 6, 7. Pistons 8, 9 are provided at one end of each of the piston rods 6, 7, which pistons 8, 9 define two pressure chambers 10, 11 and 12, 13, respectively, for each cylinder 4, 5. At their other end, the piston rods 6, 7 are connected to the associated wheel 2, 3, so that the wheels 2, 3 move jointly with the pistons 8, 9, at least in vertical direction, as a result of which the volume of the pressure chambers 10-13 is influenced during compression and extension of the wheel (2, 3) suspensions. It is noted in that connection that the hydraulic cylinders 4, 5, at least the cylinder housings 14, 15 thereof, are rigidly connected to the chassis 16 of the vehicle 100.

The respective pressure chambers 10-13 are interconnected via hydraulic connecting lines 17-20. The hydraulic connecting lines 17, 19 on the one hand and 18, 20 on the other hand are in turn interconnected via cross lines 21, 22, as a result of which the pressure that prevails in the upper pressure chambers 10 of the cylinders 4 is in principle the same as the pressure in the lower pressure chambers 13 of the hydraulic cylinders 5, and the pressure that prevails in the lower pressure chambers 11 of the hydraulic cylinders 4 is the same as the pressure in the upper pressure chambers 12 of the hydraulic cylinders 5. In figure 1 this is schematically shown in that the upper pressure chambers 10 of the cylinders 4 and the lower pressure chambers 13 of the cylinders 5 are hatched, whilst the lower pressure chambers 11 of the cylinders 4 and the upper pressure chambers 12 of the cylinders 5 are not hatched. The hatching indicates an increased pressure that is generated when the vehicle takes a bend to the right, during which the left-hand wheel (2) suspensions compress, as schematically indicated by the arrow 23, and the right-hand wheel (3) suspensions extend (or at least tend to do so), as indicated by the arrow 24.

The spring system 1 further comprises spring-damper units 25, 26 for the left-hand wheels 2 and the right-hand wheels 3, respectively, which units are constructionally identical to each other. Each spring-damper unit 25, 26 comprises a pneumatic spring bellows 27, 28 of the roll bellows type and a hydraulic cylinder 29, 30, which spring bellows 27, 28 are connected in series with the hydraulic cylinders 29, 30, respectively, within a frame 31. The frame 31 is rigidly connected to the chassis 16 of the vehicle 100 in question, or it might be made up of the chassis 16 itself, which may be advantageous at least with a view to saving weight. The length of the spring-damper unit 25, 26 is about 60 cm. Such dimensions also make it possible to position the spring-damper units 25, 26 transversely between two parallel longitudinal girders of the chassis of a vehicle, for example.

In the situation that is shown in figure 1, the hydraulic cylinder 29 tends to extend as indicated by the arrow 90, as a result of which the associated spring bellows 27, on the other hand, will contract, whilst the hydraulic cylinder 30 tends to contract as indicated by the arrow 91, as a result of which the spring bellows 28, on the other hand, will extend. The tendency of the hydraulic cylinder 30 to contract is suppressed, however, as will be explained hereinafter, which is schematically indicated by the cross 92 through the arrow 91.

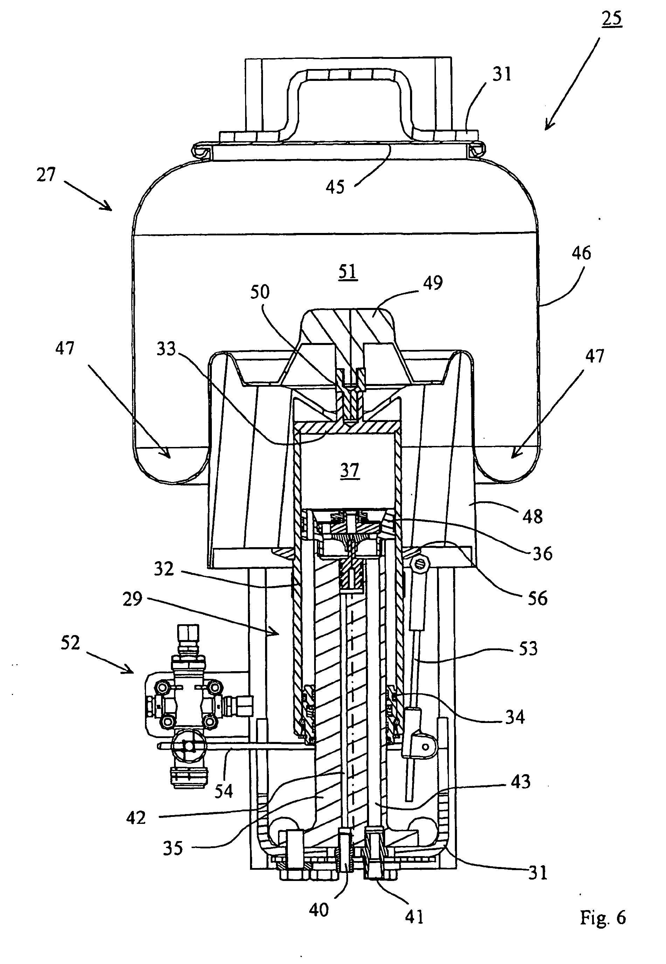

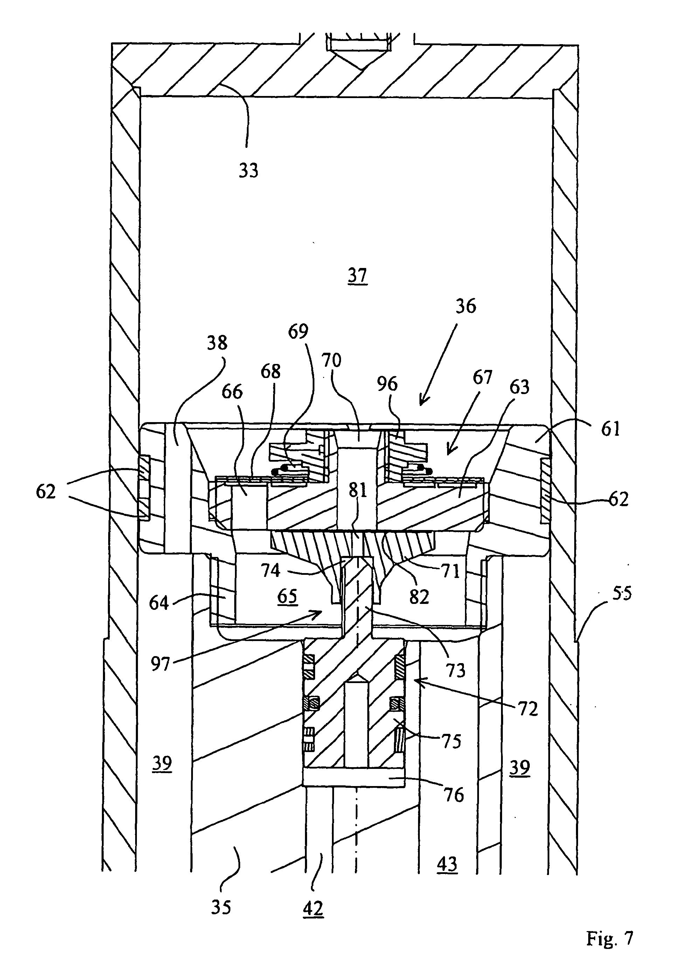

Figure 6 shows the spring-damper unit 25 in more detail, whilst figures 7 shows a part of the hydraulic cylinder 29 thereof in even greater detail. The cylinder 29 comprises a cylinder tube 32, which is provided with a cover 33 at one end and with a ring-shaped sealing element 34 on the inner side of the cylinder tube 32 at the opposite end. The hydraulic cylinder 29 further comprises a cylinder rod 35, whose external diameter is identical to the internal diameter of the ring-shaped sealing element 34. At its end facing towards the cover 33, the cylinder rod 35 is provided with a cylinder head 36, whose external diameter is larger than that of the cylinder rod 35 and identical to the internal diameter of the cylinder tube 32. The cylinder tube 32, the cover 33 and the cylinder head 36 together define a pressure chamber 37.

The pressure chamber 37 communicates with the cylindrical chamber 39 via bores 38 that are provided at radially evenly spaced positions on the outer side of the cylinder head 36. At the end remote from the cylinder head 36, the cylinder rod 35 is rigidly connected to the frame 31. The cylinder rod 35, and thus the cylinder head 36, cannot move with respect to the frame 31, therefore, whereas the cylinder tube 31, on the other hand, can move with respect to the frame 31.

Furthermore, two hydraulic connections 40, 41 are provided for hydraulic channels 42, 43 extending within the cylinder rod 35, in the longitudinal direction thereof. The hydraulic channel 43 is intended for supplying oil to or discharging oil from the pressure chamber 37, which pressure chamber 37 communicates with the cross line 21 via the hydraulic connection 41 and the branch line 44. The hydraulic channel 42 is intended to function as a hydraulic control channel for the throttle valve (yet to be discussed in more detail) that is associated with the hydraulic cylinder 29. The hydraulic channel 42 is in communication with the cross line 22 via the hydraulic connection 40 and the branch line 77.

At its end remote from the hydraulic cylinder 29, the spring bellows 27 comprises a disc-shaped steel bellows plate 45, which is rigidly connected to the frame 31. A cylindrical bellows wall 46 of a rubber or at least rubber-like material joins the circumference of the bellows plate 45, which bellows wall is folded inwards through 180° on its side facing towards the hydraulic cylinder 29 at the location indicated at 47, and which abuts against the outer side of a cylindrical connecting element 48 beyond said inwardly folded part. At the location of the central axis, the bellows wall 46 blends into a stub 49, which is connected to the cover 33 via a connecting sleeve 50, for example via a glued joint and/or a screwed joint. The bellows plate 45 and the bellows wall 46, including the stub 49, define a pressure chamber 51 for the spring bellows 27. In the case of a large degree of compression, the stub 49 may strike against the bellows plate 45, which is undesirable for reasons of comfort.

The pressure within the pressure chamber 51 is automatically adjusted by means of the height control valve 52 via rods 53, 54, which are pivotally interconnected. The rod 53 is in engagement with the connecting element 48, and consequently it moves together with the connecting element 48 but also with the cylinder tube 32. The rod 54 actuates the valve associated with the height control valve. The hydraulic cylinder 29 will extend upon sagging of the vehicle sags during loading, as a result of which the rod 53 will cause the rod 54 to pivot upwards about a pivot axis perpendicular to the plane of drawing (figure 6) through the height control valve 52. As a result, the height control valve 52 is actuated in such a manner that air will move from a pressure vessel, within which a constant, relatively high pneumatic pressure of e.g. 8-10 bar is maintained by means of a compressor, to the pressure chamber 51, causing the pressure within said pressure chamber 51 to increase to such an extent that the length of the spring bellows 27, and thus also of the hydraulic cylinder 29, will resume their original values. The amount of travel upon compression of the spring bellows 27 thus remains the same, in spite of the heavier load, as a result of which the natural frequency of the spring bellows 27 will also remain substantially the same. The spring constant of the spring bellows 27, on the other hand, will increase because of the increased pressure within the pressure chamber 51. When the vehicle's suspension extends again after compression thereof, the hydraulic cylinder 29 will contract again, as a result of which the rod 53 causes the rod 54 to pivot downwards. The valve 52 will assume a position in which air will exit the pressure chamber 51 so as to make the spring bellows 27 and the hydraulic cylinder 29 resume their original length again.

Typical pressure values that might prevail within the pressure chamber 51 are 0.8 - 0.9 bar in fully unloaded condition of the vehicle 100, and 5 - 6 bar in (maximally) loaded condition of the vehicle 100.

The (average) ground clearance of the vehicle in question can be adjusted independently of the compression/extension of said vehicle's suspension and the load by supplying or discharging hydraulic fluid to the hydraulic circuits. To that end a hydraulic pump 91 is provided, which is in communication with the lines 21, 22 via valves 92, 93 and via non-return valves (not shown), pressure relief valves and flow control valves. The valves 92, 93 can for example be actuated by the driver of the vehicle in question. The average ground clearance of the vehicle is increased or decreased by supplying or discharging, respectively, hydraulic fluid to the hydraulic circuits of which the lines 21, 22 form part.

The connecting element 48 clamps around the end of the cylinder tube 32 facing towards the spring bellows 27 with a tight fit. To obtain said tight fit, the outer side of the cylinder tube 32 has been precisely machined along part of its length, thereby forming a step 55 at which a retaining ring 56 for the connecting element 48 is provided.

The external diameter of the connecting element 48 amounts to about 65% of that of the spring bellows 27. The connecting element 48 forms a piston for the spring bellows 27, as it were, which can move into and out of the bellows 27 together with the cylinder tube 32 upon compression and extension of the spring bellows 27. The diameter of the cylinder tube 32 amounts to about 25% of that of the spring bellows 27. For that reason the cylinder tube 32 itself is less effective in functioning independently as a piston for the spring bellows 27, and it will be advantageous to use a connecting element 48 having a larger diameter.

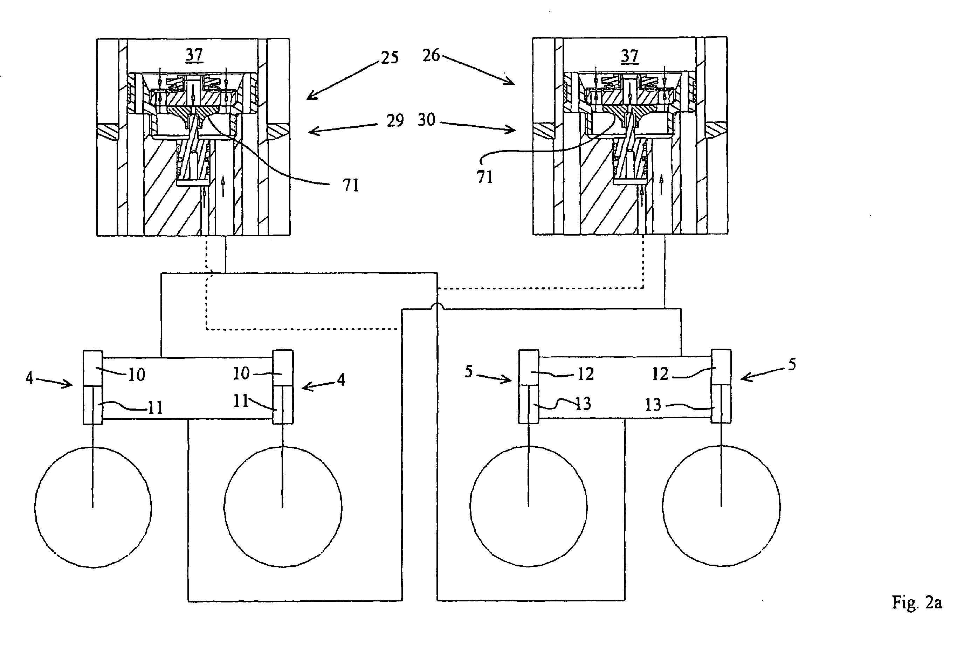

The cylinder head 36 comprises an outer ring 61, in which the aforesaid bores 38 are present and which is externally provided with a guide band 62, and an inner disc 63 positioned within the outer ring 61. An intermediate pressure chamber 65 is present below the inner disc 63, on the inner side of the downwardly extending cylindrical wall 64 of the outer ring 61. Said intermediate pressure chamber 65 is in direct communication with the hydraulic channel 43. The cylindrical wall 64 is externally provided with screw thread, via which the outer ring 61 is screwed on the cylinder rod 35. The inner disc 63 is circumferentially provided with evenly spaced bores 66, only one of which is shown in figure 7, whereas two such bores are shown in figures 2a, 3a, 4a and 5a. A non-return valve 67 is provided at the upper side of said bores 66.

The non-return valve 67 comprises a valve ring 68, which is pressed downwards to close the bores 66 by a spring 69, which is held in place by a retaining element 96 that is provided concentrically above the inner disc 63, in order to close the bores 66. Said closure of the bores 66 can be eliminated if the pressure of oil in the intermediate pressure chamber 65 increases to such an extent that said oil exerts a force on the valve ring 68 larger than the joint force that results from the action of the spring 69 and the (oil) pressure within the pressure chamber 37. The supply of oil to the pressure chamber 37 via the non-return valve 67 in this manner will cause the volume of the pressure chamber 37 to increase, because the cylinder tube 37 slides upwards along the cylinder rod 35 and the cylinder head 36. As a consequence of this, the cylinder tube 32 will move in the direction of the spring bellows 27 together with the connecting element 48, causing the volume of the pressure chamber 51 to decrease and the pressure to increase, assuming that the amount of air within the pressure chamber 51 remains the same, resulting in an increased resistance to extension of the cylinder tube 32. At a certain point a condition of equilibrium will be obtained, in which the pneumatic pressure in the pressure chamber 51 and the hydraulic pressure in the pressure chamber 37 are in equilibrium. The pressure in the pressure chamber 37 will continue to increase upon extension of the cylinder tube 32, as a result of which the non-return valve 67 will close again at a certain stage, thereby preventing oil that is present in the pressure chamber 37 from flowing back in the direction of the hydraulic cylinders 4 via the bores 66.

A central throttle bore 70, which forms part of a throttle valve 97, is provided for the return flow of oil from the pressure chamber 37. The diameter of the bore 70 is approximately the same as that of the individual bores 66, so that the bore 70 as such already offers a higher resistance to the flow of oil therethrough than the joint bores 66. In figure 7, the bottom side of the bore 70 is closed by a valve element 71 having a flat upper side with a slightly recessed chamber 82. The valve element 71 is in turn pressed upwards by an actuating element 72, a central nose 73 of which extends within a bore 74 in the valve element 71. The cylindrical body 75 of the actuating element 72, which is provided with seals on the outer circumference thereof, extends within a bore of which the chamber 76 below the cylindrical member 75 forms part. The chamber 76 connects to the hydraulic channel 42. Said hydraulic channel 42 connects to the cross line 22 via the hydraulic connection 40 and the branch line 77. When the pressure in the cross line 22 or in the pressure chambers 11, 12 of the hydraulic cylinders 4, 5, respectively, is sufficiently high, the actuating element 72 will assume the position that is shown in figure 7, in which the valve element 71 is forced upwards against the pressure of the oil in the pressure chamber 37 so as to close the central bore 70.

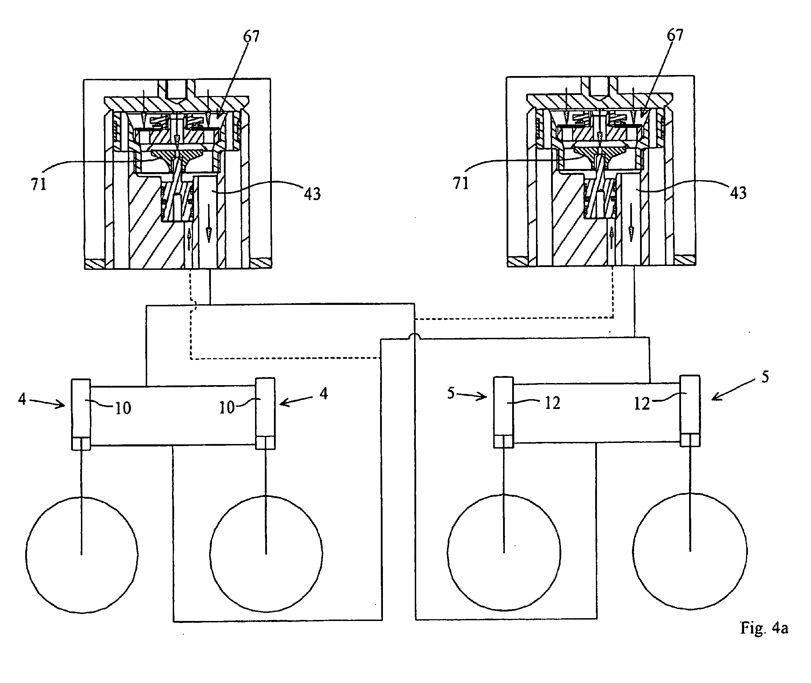

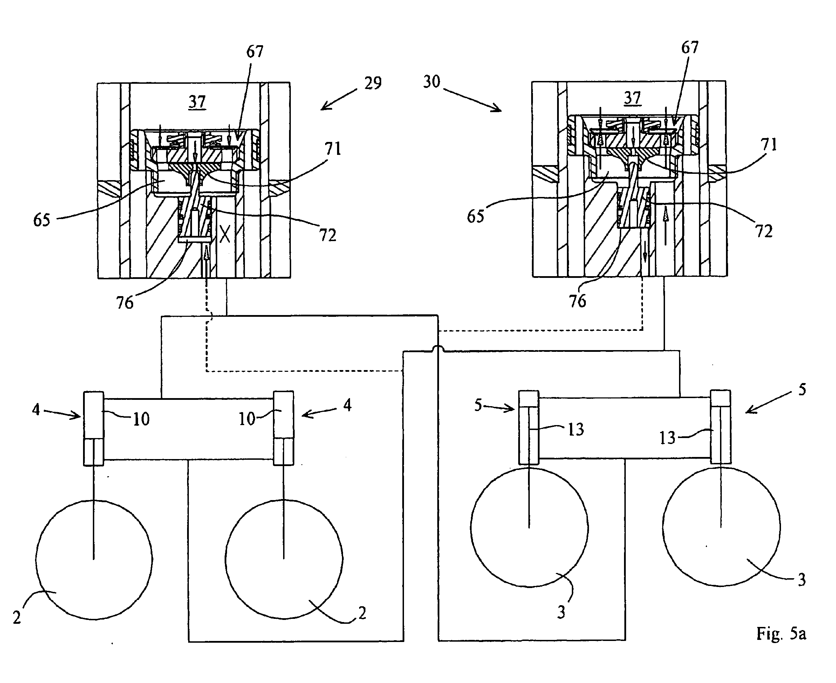

When the pressure in the pressure chamber 37 increases and/or the pressure in the chamber 76 decreases, however, the valve element 71 will be pressed downwards together with the actuating element 72, as is shown in figure 4a, as a result of which oil can flow, albeit throttled, from the pressure chamber 37 to the intermediate pressure chamber 65 via the bore 70 and from the hydraulic cylinder 29 via the hydraulic channel 43. This situation is shown in figure 4a. On the other hand, it may be the pressure within the intermediate pressure chamber 65 rather than the pressure within the pressure chamber 37 that forces the actuating element 72 downwards against the pressure in the chamber 76. The same pressure in the intermediate pressure chamber 65 on the other hand ensures that the valve element 71 is still pressed upwards. This situation is shown on the right-hand side in figure 5a for the hydraulic cylinder 30. In this situation it is important to note that the valve element 71 is in turn provided with a small bore 81 that connects the bore 70 to the bore 74.

The operation of the spring system 1 as described above will now be described also with reference to figures 2a-5b. In figures 2a, 3a, 4a, 5a, unnumbered arrows represent the pressures or at least the forces being exerted by pressures or the direction in which oil flows or at least tends to flow under the influence of the prevailing pressures, the size of the arrows being a measure of the magnitude of the pressures/forces/flows in question.

Figures 2a and 2b relate to the situation in which the spring system 1 is in a neutral position, without the wheel (2, 3) suspensions tending to compress or extend. In such a situation, the same pressures prevail in the pressure chambers 10-13 of the hydraulic cylinders 4 of 5. In addition to that, both the non-return valve 67 and the throttle valve 97 of the spring-damper units 25, 26 are in the closed position, so that oil can flow neither into nor out of the pressure chamber 37 of the respective cylinders 29, 30.

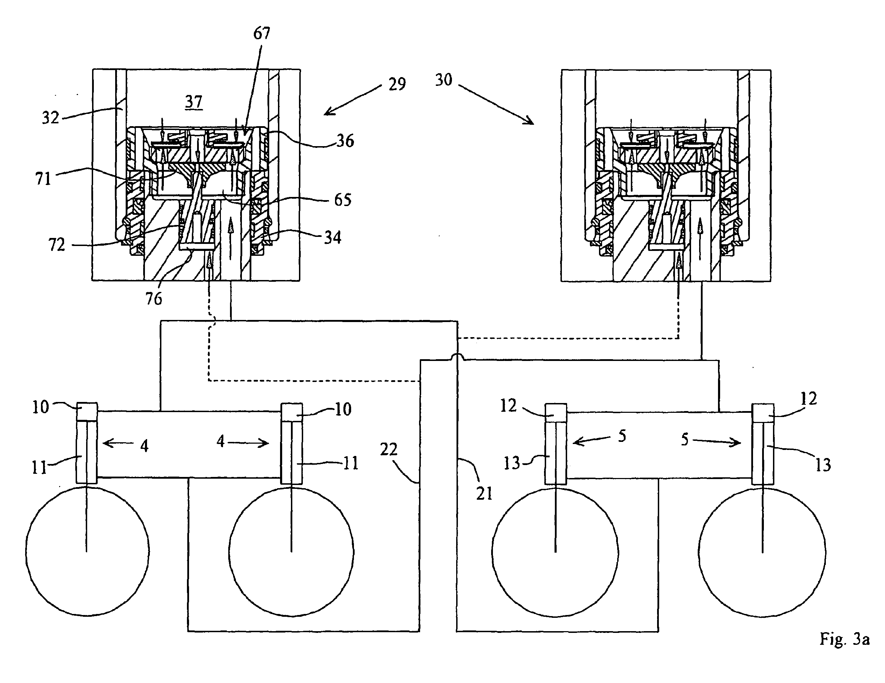

Figures 3a and 3b relate to the situation in which the spring system 1 compresses, for example in response to the vehicle 100 driving over a speed bump. Said compression causes oil to be forced from the pressure chambers 10, 12, the volume of which chambers 10, 12 is reduced upon compression, to the hydraulic cylinders 29, 30, respectively. The increased pressure causes the non-return valve 67 to open, as a result of which oil flows from the intermediate pressure chamber 65 to the pressure chamber 37. To make room for said oil, the cylinder tube 32 slides in the direction of the spring bellows 27, 28, which movement is stopped by the ring-shaped sealing element 34 associated with the hydraulic cylinders 29, 30 striking against the cylinder head 36. This extreme situation is also shown in figure 3a, in which the volume of the cylindrical chamber 39 has been reduced to zero.

The extension of the cylinder tube 32 and thus of the connecting element 48, which functions as a piston for the spring bellows 25, 26, as it were, causes the bellows wall 46 to deform, with the volume of the pressure chamber 51 decreasing and the pneumatic pressure in the pressure chamber 51 logically increasing. Once the pressures in the pressure chamber 37 and the pressure chamber 51 are in equilibrium, the extension of the cylinder tube 31 will stop and compression will follow, which will be explained in more detail yet with reference to figures 4a-4b.

As a result of the higher pressure both in the chamber and 76 and in the intermediate pressure chamber 65 resulting from said compression, having in mind the relatively lower pressure in the pressure chamber 37 during said compression, the actuating element 72 and the valve element 71, respectively, are in the position that is shown in figure 3a, in which the throttle valve 97 is closed, therefore, and return flow of oil from the pressure chamber 37 is not possible. Because of the crosswise connection of the hydraulic cylinders 4, 5 via the cross lines 21, 22, the oil that is forced from the pressure chambers 10, 12, respectively, reaches not only the hydraulic cylinders 29, 30, respectively, but also the pressure chambers 13, 11 of the other hydraulic cylinders 4, 5.

Upon extension of the spring system 1 (figures 4a, 4b), the non-return valve 67 closes and the throttle valve 97 with the valve element 71 opens, as a result of which oil can flow back to the respective pressure chambers 10, 12 of the hydraulic cylinders 4, 5 via the hydraulic channel 43. The throttle valve 97 offers a larger flow resistance than the non-return valve 67 does upon compression, however. In this way a damping effect is obtained.

Figures 5a and 5b, to conclude, relate to the situation in which the vehicle 100 is taking a bend to the left. The right-hand wheel (3) suspensions tend to compress in that case, whilst the left-hand wheel (2) suspensions, on the other hand, tend to extend. In this situation there is a risk of the vehicle 100 overturning. Because of the relatively low pressure in the pressure chambers 10 and consequently in the intermediate pressure chamber 65 of the hydraulic cylinders 29, the non-return valve 67 of the hydraulic cylinder 29 is closed. On the other hand, because of the relatively high pressure in the pressure chambers 12 of the hydraulic cylinder and consequently the relatively high pressure in the chamber 76, the actuating element 72 forces the valve element 71 in the direction of the spring bellows 27, whilst also the throttle valve 97 associated with the hydraulic cylinder 29 is closed. For that reason, compression of the wheel (2) suspensions is not possible, in spite of the fact that they exhibit a tendency to do so. This has a positive influence on the role stability characteristics.

As far as the hydraulic cylinder 30 is concerned, the non-return valve 67 is opened on account of the higher pressure in the pressure chambers 12. In addition to that, the valve element 71 remains closed on account of the higher pressure in the intermediate pressure chamber 65, in spite of the fact that the actuating element 72 is in its lowermost position due to the relatively low pressure in the chamber 76 or in the pressure channel 42.

In addition to good spring characteristics, the spring system 1 as described above also has good damping characteristics and good roll stabilisation characteristics, in spite of the fact that the spring system 1 may be of relatively simple and inexpensive construction. In addition to that, the spring system 1 has a relatively low weight and its dimensions remain within relatively limited bounds, as a result of which the spring system only requires a limited amount of space. Further advantages are the fact that air, which is relatively cheap, can function as the pneumatic medium for a pneumatic part thereof, also because there is no risk of the hydraulic medium and the pneumatic medium being mixed, not even in the case of one of the components springing a leak. In addition to that, the use of the spring bellows 27, 28 makes it possible in a simple manner to realise a load-dependent brake control for the vehicle in question, wherein the pressure within the spring bellows 27, 28 is utilised, using standard components, for controlling the brakes in dependence on the weight of the load of the vehicle. In addition to that, a possibility is provided of adjusting the ground clearance.

The invention is not limited to the specific embodiment of the spring system 1 as described above, but its scope is in the first place defined in the following claims.

## Claims

1. A spring system for a vehicle, comprising a first hydraulic cylinder (4), which is connected to a wheel (2) on one long side of the vehicle, a pressure chamber (10) of which first hydraulic cylinder communicates with a pressure chamber (37) of a second hydraulic cylinder (29) via a hydraulic pressure line (17, 21, 43, 44) in such a manner that the length of the second hydraulic cylinder changes upon compression or extension of the wheel suspension, which second hydraulic cylinder is connected in series with a pneumatic accumulator (27) within a frame (31), wherein a fixed part (45) of the pneumatic accumulator as well as a fixed part (35) of the second hydraulic cylinder are rigidly connected to the frame, and wherein a movable part (49) of the pneumatic accumulator and a movable part (33) of the second hydraulic cylinder are interconnected for joint movement, **characterised in that** a height control valve is provided for automatically adjusting the pneumatic accumulators in dependence on the length of the second hydraulic cytinder such that the length of the pneumatic accumulator is at least substantially independent of the weight of the load of the vehicle.

2. A spring system according to claim 1. wherein the vehicle comprises a further first hydraulic cylinder (5), which is connected to a further wheel (3) on the other long side of the vehicle, a pressure chamber (12) of which further first hydraulic cylinder communicates with a pressure chamber (37) of a further second hydraulic cylinder (30) via a further hydraulic pressure line (20, 22, 43, 44) in such a manner that the length of the further second hydraulic cylinder changes upon compression or extension of the suspension of said further wheel, which further second hydraulic cylinder is connected in series with a further pneumatic accumulator (28) within a further frame (31), wherein a fixed part (45) of said further pneumatic accumulator as well as a fixed part (35) of said further second hydraulic cylinder are rigidly connected to said further frame, and wherein a movable part (49) of said further pneumatic accumulator and a movable part (33) of said further second hydraulic cylinder are interconnected for joint movement.

3. A spring system according to claim 1 or 2, wherein a mechanical transmission (53, 54) is provided between the second hydraulic cylinder and the height control valve.

4. A spring system according to any one of the preceding claims, wherein a non-return valve (67) is incorporated in the hydraulic pressure line, through which valve hydraulic medium can flow from the pressure chamber of the first hydraulic cylinder to the pressure chamber of the second hydraulic cylinder.

5. A spring system according to claim 4, wherein the non-return valve forms part of the second hydraulic cylinder, preferably of the fixed part thereof.

6. A spring system according to any one of the preceding claims, wherein a throttle valve (97) is incorporated in the hydraulic pressure line, through which throttle valve hydraulic medium can flow from the pressure chamber of the second hydraulic cylinder to the pressure chamber of the first hydraulic cylinder.

7. A spring system according to claim 6, wherein the spring system comprises control means for controlling the operation of the throttle valve.

8. A spring system according to claim 2 or a claim dependent thereon and according to claim 7, wherein the control means control the operation of the throttle valve in dependence on the pressure that prevails in the pressure chamber of the further first hydraulic cylinder.

9. A spring system according to claim 8, wherein the control means comprise an auxiliary pressure line (42) which branches off the further hydraulic pressure line and via which an actuating element (72) of the throttle valve is operated.

10. A spring system according to claim 9, wherein the auxiliary pressure line extends at least partially through the fixed part of the second hydraulic cylinder.

11. A spring system according to any one of the claims 6-10, wherein the throttle valve comprises a valve element (71) and an actuating element (72), wherein the valve is closed in a first position of the actuating element, and wherein the valve element may occupy a closed position or an open position, partially depending on the pressure that prevails in the pressure chamber of the second hydraulic cylinder, in a second position of the actuating element.

12. A spring system according to any one of the claims 6-11, wherein the throttle valve forms part of the second hydraulic cylinder, preferably of the fixed part thereof.

13. A spring system according to any one of the preceding claims, wherein the hydraulic pressure line extends at least partially through the fixed part of the second hydraulic cylinder.

14. A spring system according to any one of the preceding claims, wherein the fixed part of the second hydraulic cylinder comprises a cylinder rod (35) with a cylinder head (36) on a free end thereof, along which cylinder head the cylinder tube (32) forming part of the movable part of the second hydraulic cylinder can move reciprocatingly.

15. A spring system according to any one of the preceding claims, wherein both the second hydraulic cylinder and the pneumatic accumulator have a diameter and the diameter of the second hydraulic cylinder amounts to less than 40% of the diameter of the pneumatic accumulator.

16. A spring system according to claim 15, wherein the spring system comprises a connecting element (48) having a diameter, which functions to connect the movable part of the second hydraulic cylinder to the movable part of the pneumatic accumulator, wherein the diameter of the connecting element ranges between the diameter of the second hydraulic cylinder and the diameter of the pneumatic accumulator.

17. A spring system according to claim 16, wherein the diameter of the connecting elements ranges between 45% and 85% of the diameter of the pneumatic accumulator.

18. A spring system according to claim 2 or a claim dependent thereon, wherein the first hydraulic cylinder and the further first hydraulic cylinder are of the double-acting type and communicate crosswise.

19. A spring system according to any one of the preceding claims, wherein the frame is at least partially formed by the vehicle chassis.

20. A spring system according to any one of the preceding claims, wherein the pneumatic accumulator comprises a flexible wall (46).

21. A spring system according to any one of the preceding claims, wherein the pneumatic accumulator is a bellows-type accumulator.

22. A spring system according to any one of the preceding claims, wherein pressure chambers associated with the second hydraulic cylinder and the pneumatic accumulator each have a wall of their own that surrounds the respective pressure chamber.

23. A spring system according to any one of the preceding claims, wherein a valve or a combination of valves comprising at least three positions is provided, wherein hydraulic medium is supplied to a hydraulic circuit, of which the second hydraulic cylinder forms part, in the first position, hydraulic medium is neither supplied to nor discharged from the hydraulic circuit in the second position and hydraulic medium is discharged form the hydraulic circuit in the third position.

24. A vehicle provided with a spring system according to any one of the preceding claims.

## Patentansprüche

1. Federung für ein Fahrzeug, die einen ersten Hydraulikzylinder (4) umfasst, der mit einem Rad (2) an der Längsseite des Fahrzeugs verbunden ist, wobei eine Druckkammer (10) des ersten Hydraulikzylinders über eine hydraulische Druckleitung (17, 21, 43, 44) derart mit einer Druckkammer (37) eines zweiten Hydraulikzylinders (29) verbunden ist, dass sich die Länge des zweiten Hydraulikzylinders beim Zusammendrücken oder Ausdehnen der Radaufhängung verändert, wobei der zweite Hydraulikzylinder innerhalb eines Rahmens (31) mit einem pneumatischen Speicher (27) in Reihe angeordnet ist, wobei sowohl ein feststehender Teil (45) des pneumatischen Speichers als auch ein feststehender Teil (35) des zweiten Hydraulikzylinders starr mit dem Rahmen verbunden sind, und wobei ein beweglicher Teil (49) des pneumatischen Speichers und ein beweglicher Teil (33) des zweiten Hydraulikzylinders zwecks gemeinsamer Bewegung miteinander verbunden sind, **dadurch gekennzeichnet, dass** ein Höhensteuerventil bereitgestellt ist, um den pneumatischen Speicher in Abhängigkeit von der Länge des zweiten Hydraulikzylinders derart automatisch zu justieren, dass die Länge des pneumatischen Speichers mindestens im Wesentlichen unabhängig vom Gewicht der Ladung des Fahrzeugs ist.

2. Federung nach Anspruch 1, wobei das Fahrzeug einen weiteren ersten Hydraulikzylinder (5) umfasst, der mit einem weiteren Rad (3) an der anderen Längsseite des Fahrzeugs verbunden ist, wobei eine Druckkammer (12) des weiteren ersten Hydraulikzylinders über eine weitere hydraulische Druckleitung (20, 22, 43, 44) derart mit einer Druckkammer (37) eines weiteren zweiten Hydraulikzylinders (30) verbunden ist, dass sich die Länge des weiteren zweiten Hydraulikzylinders beim Zusammendrücken oder Ausdehnen der Aufhängung des weiteren Rades verändert, wobei der weitere zweite Hydraulikzylinder innerhalb eines weiteren Rahmens (31) mit einem weiteren pneumatischen Speicher (28) in Reihe angeordnet ist, wobei sowohl ein feststehender Teil (45) des weiteren pneumatischen Speichers als auch ein feststehender Teil (35) des weiteren zweiten Hydraulikzylinders starr mit dem weiteren Rahmen verbunden sind, und wobei ein beweglicher Teil (49) des weiteren pneumatischen Speichers und ein beweglicher Teil (33) des weiteren zweiten Hydraulikzylinders zwecks gemeinsamer Bewegung miteinander verbunden sind.

3. Federung nach Anspruch 1 oder 2, wobei zwischen dem zweiten Hydraulikzylinder und dem Höhensteuerventil eine mechanische Kraftübertragung (53, 54) bereitgestellt ist.

4. Federung nach einem der vorhergehenden Ansprüche, wobei in die hydraulische Druckleitung ein Rückschlagventil (67) eingebaut ist, durch das ein hydraulisches Ventilmedium von der Druckkammer des ersten Hydraulikzylinders in die Druckkammer des zweiten Hydraulikzylinders fließen kann.

5. Federung nach Anspruch 4, wobei das Rückschlagventil einen Teil des zweiten Hydraulikzylinders bildet, vorzugsweise von dessen feststehendem Teil.

6. Federung nach einem der vorhergehenden Ansprüche, wobei in der hydraulischen Druckleitung ein Drosselventil (97) eingebaut ist, durch das ein hydraulisches Drosselventilmedium von der Druckkammer des zweiten Hydraulikzylinders in die Druckkammer des ersten Hydraulikzylinders fließen kann.

7. Federung nach Anspruch 6, wobei die Federung Steuermittel zum Steuern des Betriebes des Drosselventils umfasst.

8. Federung nach Anspruch 2 oder einem davon abhängigen Anspruch und nach Anspruch 7, wobei die Steuermittel den Betrieb des Drosselventils in Abhängigkeit vom Druck steuern, der in der Druckkammer des weiteren ersten Hydraulikzylinders herrscht.

9. Federung nach Anspruch 8, wobei die Steuermittel eine Nebendruckleitung (42) umfassen, die von der weiteren hydraulischen Druckleitung abzweigt und über die ein Betätigungselement (72) des Drosselventils betrieben wird.

10. Federung nach Anspruch 9, wobei die Nebendruckleitung mindestens teilweise durch den feststehenden Teil des zweiten Hydraulikzylinders verläuft.

11. Federung nach einem der Ansprüche 6 bis 10, wobei das Drosselventile ein Ventilelement (71) und ein Betätigungselement (72) umfasst, wobei das Ventil in einer ersten Stellung des Betätigungselements geschlossen ist und wobei das Ventilelement, teilweise in Abhängigkeit vom Druck, der in der Druckkammer des zweiten Hydraulikzylinders herrscht, in einer zweiten Stellung des Betätigungselements eine geschlossene oder eine offene Stellung einnehmen kann.

12. Federung nach einem der Ansprüche 6 bis 11, wobei das Drosselventil einen Teil des zweiten Hydraulikzylinders bildet, vorzugsweise von dessen feststehendem Teil.

13. Federung nach einem der vorhergehenden Ansprüche, wobei die hydraulische Druckleitung mindestens teilweise durch den feststehenden Teil des zweiten Hydraulikzylinders verläuft.

14. Federung nach einem der vorhergehenden Ansprüche, wobei der feststehende Teil des zweiten Hydraulikzylinders eine Kolbenstange (35) mit einem Zylinderkopf (36) an ihrem einen freien Ende umfasst, wobei sich das Zylinderrohr (32), das einen Teil des beweglichen Teils des zweiten Hydraulikzylinders bildet, entlang dieses Zylinderkopfs hin und her bewegen kann.

15. Federung nach einem der vorhergehenden Ansprüche, wobei sowohl der zweite Hydraulikzylinder als auch der pneumatische Speicher einen Durchmesser aufweisen und der Durchmesser des zweiten Hydraulikzylinders weniger als 40 % des Durchmessers des pneumatischen Speichers beträgt.

16. Federung nach Anspruch 15, wobei die Federung ein Verbindungselement (48) mit einem Durchmesser umfasst, das als Verbindung des beweglichen Teils des zweiten Hydraulikzylinders mit dem beweglichen Teil des pneumatischen Speichers fungiert, wobei der Durchmesser des Verbindungselements zwischen dem Durchmesser des zweiten Hydraulikzylinders und dem Durchmesser des pneumatischen Speichers liegt.

17. Federung nach Anspruch 16, wobei der Durchmesser des Verbindungselements zwischen 45 % und 85 % des Durchmessers des pneumatischen Speichers liegt.

18. Federung nach Anspruch 2 oder einem davon abhängigen Anspruch, wobei der erste Hydraulikzylinder und der weitere erste Hydraulikzylinder vom doppeltwirkenden Typ sind und kreuzweise in Verbindung stehen.

19. Federung nach einem der vorhergehenden Ansprüche, wobei der Rahmen mindestens teilweise vom Fahrzeugchassis gebildet wird.

20. Federung nach einem der vorhergehenden Ansprüche, wobei der pneumatische Speicher eine flexible Wandung (46) umfasst.

21. Federung nach einem der vorhergehenden Ansprüche, wobei der pneumatische Speicher ein Balgspeicher ist.

22. Federung nach einem der vorhergehenden Ansprüche, wobei die Druckkammern, die mit dem zweiten Hydraulikzylinder und dem pneumatischen Speicher verbunden sind, jeweils eine eigene Wandung aufweisen, die die entsprechende Druckkammer umgibt.

23. Federung nach einem der vorhergehenden Ansprüche, wobei ein Ventil oder eine Kombination von Ventilen mit mindestens drei Stellungen bereitgestellt ist, wobei in der ersten Stellung hydraulisches Medium einem Hydraulikkreislauf zugeführt wird, von dem der zweite Hydraulikzylinder ein Teil ist, in der zweiten Stellung hydraulisches Medium dem Hydraulikkreislauf weder zugeführt noch daraus abgeleitet wird und in der dritten Stellung aus dem Hydraulikkreislauf abgeleitet wird.

24. Fahrzeug, das mit einer Federung nach einem der vorhergehenden Ansprüche ausgestattet ist.

## Revendications

1. Système de suspension pour un véhicule, comportant un premier cylindre hydraulique (4), qui est relié à une roue (2) sur un côté long du véhicule, une chambre de pression (10) du premier cylindre hydraulique communiquant avec une chambre de pression (37) d'un deuxième cylindre hydraulique (29) par l'intermédiaire d'une ligne de pression hydraulique (17, 21, 43, 44) d'une manière telle que la longueur du deuxième cylindre hydraulique change lors de la compression ou de l'extension de la suspension de roue, le deuxième cylindre hydraulique étant relié en série avec un accumulateur pneumatique (27) à l'intérieur d'un châssis (31), une partie fixe (45) de l'accumulateur pneumatique ainsi qu'une partie fixe (35) du deuxième cylindre hydraulique étant reliées rigidement au châssis, et une partie mobile (49) de l'accumulateur pneumatique et une partie mobile (33) du deuxième cylindre hydraulique étant interconnectées pour un mouvement conjoint, **caractérisé en ce que** une soupape de commande de hauteur est prévue pour ajuster automatiquement l'accumulateur pneumatique en fonction de la longueur du deuxième cylindre hydraulique de telle sorte que la longueur de l'accumulateur pneumatique est au moins sensiblement indépendante du poids de la charge du véhicule.

2. Système de suspension selon la revendication 1, dans lequel le véhicule comporte un autre premier cylindre hydraulique (5) qui est relié une autre roue (3) sur l'autre côté long du véhicule, une chambre de pression (12) de l'autre premier cylindre hydraulique communiquant avec une chambre de pression (37) d'un autre deuxième cylindre hydraulique (30) par l'intermédiaire d'une autre ligne de pression hydraulique (20, 22, 43, 44) d'une manière telle que la longueur de l'autre deuxième cylindre hydraulique change lors de la compression ou de l'extension de la suspension de ladite autre roue, l'autre deuxième cylindre hydraulique étant relié en série avec un autre accumulateur pneumatique (28) à l'intérieur d'un autre châssis (31) ; une partie fixe (45) dudit autre accumulateur pneumatique ainsi qu'une partie fixe (35) dudit autre deuxième cylindre hydraulique étant reliées rigidement audit autre châssis, et une partie mobile (49) dudit autre accumulateur pneumatique et une partie mobile (33) dudit autre deuxième cylindre hydraulique étant interconnectées pour un mouvement conjoint.

3. Système de suspension selon la revendication 1 ou 2, dans lequel une transmission mécanique (53, 54) est prévue entre le deuxième cylindre hydraulique et la soupape de commande de hauteur.

4. Système de suspension selon l'une quelconque des revendications précédentes, dans lequel un clapet anti-retour (67) est incorporé dans la ligne de pression hydraulique, du fluide hydraulique pouvant s'écouler à travers ce clapet depuis la chambre de pression du premier cylindre hydraulique jusqu'à la chambre de pression du deuxième cylindre hydraulique.

5. Système de suspension selon la revendication 4, dans lequel le clapet anti-retour fait partie du deuxième cylindre hydraulique, de préférence de la partie fixe de celui-ci.

6. Système de suspension selon l'une quelconque des revendications précédentes, dans lequel un étranglement (97) est incorporé dans la ligne de pression hydraulique, du fluide hydraulique pouvant s'écouler à travers cet étranglement depuis la chambre de pression du deuxième cylindre hydraulique jusqu'à la chambre de pression du premier cylindre hydraulique.

7. Système de suspension selon la revendication 6, dans lequel le système de suspension comporte des moyens de commande destinés à commander le fonctionnement de l'étranglement.

8. Système de suspension selon la revendication 2 ou une revendication rattachée à celle-ci et selon la revendication 7, dans lequel les moyens de commande commandent le fonctionnement de l'étranglement en fonction de la pression qui règne dans la chambre de pression de l'autre premier cylindre hydraulique.

9. Système de suspension selon la revendication 8, dans lequel les moyens de commande comportent une ligne de pression auxiliaire (42) qui part de l'autre ligne de pression hydraulique et par l'intermédiaire de laquelle un élément d'actionnement (72) de l'étranglement est actionné.

10. Système de suspension selon la revendication 9, dans lequel la ligne de pression auxiliaire s'étend au moins partiellement à travers la partie fixe du deuxième cylindre hydraulique.

11. Système de suspension selon l'une quelconque des revendications 6 à 10, dans lequel l'étranglement comporte un élément de soupape (71) et un élément d'actionnement (72), la soupape étant fermée dans une première position de l'élément d'actionnement, et l'élément de soupape pouvant occuper une position de fermeture ou une position d'ouverture, partiellement en fonction de la pression qui règne dans la chambre de pression du deuxième cylindre hydraulique, dans une deuxième position de l'élément d'actionnement.

12. Système de suspension salon l'une quelconque des revendications 6 à 11, dans lequel l'étranglement fait partie du deuxième cylindre hydraulique, de préférence de la partie fixe de celui-ci.

13. Système de suspension selon l'une quelconque des revendications précédentes, dans lequel la ligne de pression hydraulique s'étend au moins partiellement à travers la partie fixe du deuxième cylindre hydraulique.

14. Système de suspension selon l'une quelconque des revendications précédentes, dans lequel la partie fixe du deuxième cylindre hydraulique comporte une tige de cylindre (35) avec une tête de cylindre (36) sur une extrémité libre de celle-ci, le tube de cylindre (32) faisant partie de la partie mobile du deuxième cylindre hydraulique pouvant se déplacer en va et vient le long de cette tête de cylindre.

15. Système de suspension selon l'une quelconque des revendications précédentes, dans lequel le deuxième cylindre hydraulique et l'accumulateur pneumatique ont un diamètre et le diamètre du deuxième cylindre hydraulique représente moins de 40% du diamètre de l'accumulateur pneumatique.

16. Système de suspension selon la revendication 15, dans lequel le système de suspension comporte un élément de raccordement (48) ayant un diamètre, qui fonctionne afin de relier la partie mobile du deuxième cylindre hydraulique à la partie mobile de 1`accurnulateur pneumatique, le diamètre de l'élément de raccordement s'échelonnant entre le diamètre du deuxième cylindre hydraulique et le diamètre de l'accumulateur pneumatique.

17. Système de suspension selon la revendication 16, dans lequel le diamètre des éléments de raccordement s'étend entre 45% et 85% du diamètre de l'accumulateur pneumatique.

18. Système de suspension selon la revendication 2 ou une revendication rattachée à celle-ci, dans lequel le premier cylindre hydraulique et l'autre premier cylindre hydraulique sont du type à double effet et communiquent de manière croisée.

19. Système de suspension selon l'une quelconque des revendications précédentes, dans lequel le châssis est au moins partiellement formé par le châssis de véhicule.

20. Système de suspension selon l'une quelconque des revendications précédentes, dans lequel l'accumulateur pneumatique comporte une paroi flexible (46).

21. Système de suspension selon l'une quelconque des revendications précédentes, dans lequel l'accumulateur pneumatique est un accumulateur du type à soufflet.

22. Système de suspension selon l'une quelconque des revendications précédentes, dans lequel des chambres de pression associées au deuxième cylindre hydraulique et à l'accumulateur pneumatique ont chacune leur propre paroi qui entoure la chambre de pression respective.

23. Système de suspension selon l'une quelconque des revendications précédentes, dans lequel une soupape ou une combinaison de soupapes comportant au moins trois positions est prévue, du fluide hydraulique étant délivré à un circuit hydraulique, dont le deuxième cylindre hydraulique fait partie, dans la première position, du fluide hydraulique n'étant ni délivré à ni refoulé du circuit hydraulique dans la deuxième position et du fluide hydraulique étant refoulé du circuit hydraulique dans la troisième position.

24. Véhicule pourvu d'un système de suspension selon l'une quelconque des revendications précédentes.
